# EUROPÄISCHE PATENTANMELDUNG

(11) **EP 2 551 999 A1**
(43) Veröffentlichungstag der Anmeldung: **30.01.2013**
(21) Anmeldenummer: 11175538.5
(22) Anmeldetag: 27.07.2011
(51) Int. Cl.: H02K 19/36, H02K 11/04

(54) **Elektrische Maschine mit schleifringloser Erregung**

(71) Anmelder: Siemens Aktiengesellschaft, 80333 München (DE)
(72) Erfinder: Schwesig, Günter, 91054 Erlangen (DE)

(57) **Zusammenfassung**

Es soll ein einfach herzustellender und kostengünstiger Antrieb für Industrieanlagen und Elektrofahrzeuge bereitgestellt werden. Dazu wird eine elektrische Maschine mit einem Ständer (2) und einem Läufer (3), der mit dem Ständer magnetisch zusammenwirkt und eine Erregerwicklung besitzt, vorgeschlagen. Außerdem weist die elektrische Maschine eine erste Wicklung (6), die an dem Läufer (3) befestigt ist, und einen Gleichrichter (10) auf, der an dem Läufer (3) befestigt ist. Zudem ist der Gleichrichter eingangsseitig an die erste Wicklung (6) und ausgangsseitig an die Erregerwicklung des Läufers (3) angeschlossen. Die elektrische Maschine besitzt ferner eine zweite Wicklung (7), die konzentrisch mit der ersten Wicklung (6) und drehfest mit dem Ständer (2) verbunden ist. Die Erregerwicklung des Läufers (3) ist somit über die erste und zweite Wicklung (6,7) schleifringlos erregbar.

## Beschreibung

Die vorliegende Erfindung betrifft eine elektrische Maschine mit einem Ständer und einem Läufer, der mit dem Ständer magnetisch zusammenwirkt und eine Erregerwicklung besitzt.

Für Industrieantriebe und Elektrofahrzeuge werden vorzugsweise Asynchronmaschinen und permanentmagneterregte Synchronmaschinen eingesetzt. Asynchronmaschinen haben den Nachteil der verhältnismäßig hohen Verlustleistung. Permanentmagneterregte Synchronmaschinen haben dagegen Probleme im Feldschwächbereich. Darüber hinaus müssen permanentmagneterregte Synchronmaschinen mit Permanentmagneten ausgestattet sein. Zu deren Fertigung sind in der Regel Seltene Erden notwendig. Wegen der angespannten Liefer- und Kostensituation bzgl. Seltener Erden gewinnt die fremderregte Synchronmaschine wieder mehr an Bedeutung. Dafür ist ein schleifringloses Erregersystem notwendig.

Aus der Druckschrift DE 199 34 056 A1 ist eine elektrische Schenkelpol-Synchronmaschine mit schleifringloser Erregung und Anlaufwiderstand bekannt. Der Synchronmotor besitzt eine Hauptmaschine und eine Erregermaschine. Dem Rotor und der Gleichrichteranordnung der Erregermaschine ist ein Anlaufwiderstand zugeordnet. Die drei Baugruppen sind auf der Rotorwelle axial hintereinander angeordnet und untereinander elektrisch verbunden. Die radartig ausgebildete Gleichrichteranordnung und der ebenfalls radartig ausgebildete Anlaufwiderstand sind dabei so dimensioniert, dass ihre Außendurchmesser den Außendurchmesser des Rotors nicht überschreiten.

Darüber hinaus offenbart die Druckschrift DE 34 06 274 A1 eine elektrische Synchronmaschine, die über rotierende Gleichrichter einer Erregermaschine erregt wird. Dazu ist die Dreiphasenwicklung der Synchronmaschine mit zwei in Stern geschalteten Gleichrichtern unterschiedlicher Stromrichtung verbunden.

Die Aufgabe der vorliegenden Erfindung besteht darin, einen günstig herzustellenden Antrieb für die Industrie und für Elektrofahrzeuge bereitzustellen.

Erfindungsgemäß wird diese Aufgabe gelöst durch eine elektrische Maschine mit
- einem Ständer und
- einem Läufer, der mit dem Ständer magnetisch zusammenwirkt und eine Erregerwicklung besitzt, sowie umfassend
- eine erste Wicklung, die an dem Läufer befestigt ist,
- einen Gleichrichter, der an dem Läufer befestigt ist und der eingangsseitig an die erste Wicklung und ausgangsseitig an die Erregerwicklung des Läufers angeschlossen ist, und
- eine zweite Wicklung, die konzentrisch mit der ersten Wicklung und drehfest mit dem Ständer verbunden ist, so dass
- die Erregerwicklung über die erste und zweite Wicklung schleifringlos erregbar ist.

In vorteilhafter Weise besitzt die elektrische Maschine also eine Sekundärwicklung am Läufer und eine Primärwicklung am Ständer. Der dadurch gebildete Transformator ermöglicht eine berührungslose und insbesondere schleifringlose Übertragung einer Erregerspannung von außen auf den Läufer. Die Primärwicklung und die Sekundärwicklung dieses Übertragungssystems können verhältnismäßig kostengünstig hergestellt werden, und es sind für die Erregung somit keine teuren Permanentmagnete notwendig.

Vorzugsweise ist die elektrische Maschine als Synchronmaschine ausgebildet. Derartige Maschinen haben in der Industrie und beim Antrieb von Fahrzeugen eine große Verbreitung.

Darüber hinaus ist es vorteilhaft, wenn die elektrische Maschine ein Gehäuse aufweist, in dem der Ständer befestigt und der Läufer gelagert ist. Damit ist die elektrische Maschine nach außen hin geschützt. Die zweite Wicklung des Übertragungssystems für die Erregerspannung kann an dem Gehäuse befestigt sein. Damit ist sie über das Gehäuse drehfest mit dem Ständer verbunden.

Des Weiteren können die erste Wicklung und die zweite Wicklung jeweils ein Spulengehäuse aus einem magnetisch leitenden Werkstoff besitzen. Dies hat den Vorteil, dass das Übertragungssystem für die Erregerspannung einen höheren Wirkungsgrad besitzt als bei nichtmagnetisch leitenden Spulengehäusen.

Ferner können die erste Wicklung und die zweite Wicklung jeweils in Umfangsrichtung des Läufers gewickelt sein. Damit ergibt sich eine hochqualitative magnetische Kopplung zwischen erster Wicklung und zweiter Wicklung.

Bei einer speziellen Ausgestaltung ist die zweite Wicklung von einem Wechselrichter angesteuert, der von einer Gleichspannungsquelle versorgt ist. Dies ist insbesondere bei elektrisch betriebenen Fahrzeugen vorteilhaft, denn sie besitzen für die Energieversorgung eine Gleichspannungsquelle.

Der Wechselrichter kann von einer Steuereinrichtung angesteuert werden, die den Wechselrichter entsprechend einem vorgegebenen Sollwert für die Erregerspannung ansteuert. Damit kann entsprechend der gewünschten Erregerspannung ein hochfrequentes Übertragungssignal für die induktive Übertragung bereitgestellt werden.

Das Ansteuern des Wechselrichters kann durch die Steuereinrichtung mithilfe eines pulsweitenmodulierten Signals erfolgen. Auf diese Weise lässt sich zuverlässig ein Sollwert für die Erregerspannung in ein hochfrequentes Signal umsetzen.

Wie oben bereits angedeutet wurde, ist es besonders vorteilhaft, die genannte elektrische Maschine in einem Elektrofahrzeug als Antrieb zu verwenden. Die elektrische Maschine kann aber auch für andere Industrieantriebe verwendet werden, sodass auch dort von dem Verzicht auf Permanentmagnete profitiert werden kann.

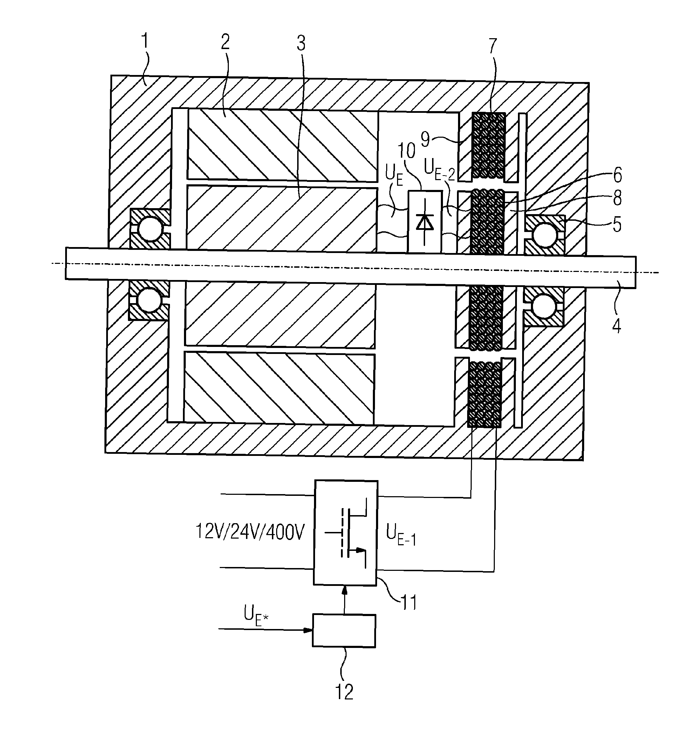

Die vorliegende Erfindung wird nun anhand der beigefügten Zeichnung näher erläutert, die einen prinzipiellen Aufbau einer erfindungsgemäßen elektrischen Maschine im Längsschnitt darstellt.

Die nachfolgend näher geschilderten Ausführungsbeispiele stellen bevorzugte Ausführungsformen der vorliegenden Erfindung dar.

Entsprechend dem Beispiel der Figur besitzt die fremderregte Synchronmaschine ein Gehäuse 1 mit Lagerschilden. Im Inneren des Gehäuses 1 befindet sich der Ständer 2. Innerhalb des Ständers 2 ist der Läufer 3 mit seiner Erregerwicklung gelagert. Die Lagerung des Läufers 3 erfolgt mithilfe einer Motorwelle 4, die mit entsprechenden Wälzlagern 5 in den Lagerschilden des Gehäuses 1 gelagert ist. Auf der Motorwelle 4 ist der Läufer 3 mit seiner Erregerwicklung fest montiert.

Die fremderregte Synchronmaschine besitzt zusätzlich zur Ständerwicklung und zur Erregerwicklung des Läufers zwei konzentrische Wicklungen 6 und 7. Diese sind ähnlich wie bei einem Resolver zur Positionserfassung angeordnet. Eine erste Wicklung 6 dieser beiden Wicklungen ist auf dem Läufer bzw. der Motorwelle 4 und damit drehfest mit dem Läufer 3 angeordnet. Eine zweite Wicklung 7 der beiden Wicklungen befindet sich etwas beabstandet radial über der ersten Wicklung 6, und sie ist axial neben dem Ständer 2 im Inneren des Gehäuses 1 befestigt. Die beiden Wicklungen 6, 7 weisen jeweils ein Spulengehäuse 8, 9 auf. Die Spulengehäuse 8, 9 bestehen aus einem magnetisch leitenden Material, z. B. Stahl. In das Spulengehäuse 8 ist die erste Wicklung 6 in Umfangsrichtung des Läufers eingewickelt. In das Spulengehäuse 9 ist die zweite Wicklung 7 ebenfalls in Umfangsrichtung des Läufers verlaufend eingebracht.

Die beiden konzentrischen Wicklungen 6, 7 wirken als Transformator zusammen. Hinsichtlich eines von außen auf den Läufer 3 zu übertragenden Erregersignals wirkt die zweite Wicklung 7 als Primärspule und die erste Wicklung 6 als Sekundärspule. Das Übersetzungsverhältnis der Wicklungen zueinander kann in gewünschter Weise eingestellt werden.

Auf dem Läufer 3 bzw. der Motorwelle 4 ist außerdem ein rotierender Gleichrichter 10 vorgesehen. Er richtet Signale von der ersten Spule 6 gleich und liefert die gleichgerichteten Signale an die Erregerwicklung des Läufers 3.

Zum Erzeugen eines Erregersignals für die fremderregte Synchronmaschine ist eine Energiequelle notwendig. Bei Industrieantrieben wird beispielsweise eine 24 V-Systemelektronikversorgung als Energiequelle benutzt. In Elektrofahrzeugen steht beispielsweise eine Niederspannungsbatterie (12 V) oder eine Hochspannungsbatterie (z. B. 400 V) der Bordnetzversorgung zur Verfügung.

Aus der jeweiligen Gleichspannungsquelle wird mithilfe eines Wechselrichters 11 eine hochfrequente Wechselspannung U_{E-1} erzeugt. Diese hochfrequente Wechselspannung U_{E-1} wird ständerseitig in die zweite Wicklung 7 eingespeist.

Die hochfrequente Wechselspannung für die Erregung wird über den Wechselrichter 11 mit variabler Ausgangsspannung erzeugt. Gesteuert wird der Wechselrichter 11 von einer Steuereinrichtung 12. Diese erhält von einer übergeordneten Steuerung oder Regelung einen Sollwert U_{E*} für die Erregerspannung. Aus diesem Sollwert U_{E*} bildet die Steuereinrichtung 12 hier ein pulsweitenmoduliertes Signal als Eingangssignal für den Wechselrichter 11.

Gemäß dem transformatorischen Prinzip wird nun die hochfrequente Wechselspannung U_{E-1} von der zweiten Wicklung 7 auf die erste Wicklung 6 und damit von der Ständerseite zur Läuferseite übertragen. An der ersten Wicklung 6 liegt demnach eine Wechselspannung U_{E-2} an. Diese Wechselspannung U_{E-2} wird auf dem Läufer 3 durch den Gleichrichter 10 gleichgerichtet, sodass am Ausgang des Gleichrichters 10 eine Gleichspannung U_{E} entsteht. Diese Gleichspannung U_{E} wird der Erregerwicklung des Läufers 3 zur Verfügung gestellt. Auf diese Weise wird also die Erregerwicklung der fremderregten Synchronmaschine mit einer Gleichspannung U_{E} gespeist, die auf dem Sollwert U_{E*} basiert. Hierdurch ergibt sich also ein schleifringloses Erregersystem für die Synchronmaschine.

## Patentansprüche

1. Elektrische Maschine mit
- einem Ständer (2) und
- einem Läufer (3), der mit dem Ständer (2) magnetisch zusammenwirkt und eine Erregerwicklung besitzt,
**gekennzeichnet durch**
- eine erste Wicklung (6), die an dem Läufer befestigt ist,
- einen Gleichrichter (10), der an dem Läufer befestigt ist und der eingangsseitig an die erste Wicklung und ausgangsseitig an die Erregerwicklung des Läufers angeschlossen ist, und
- eine zweite Wicklung (7), die konzentrisch mit der ersten Wicklung und drehfest mit dem Ständer verbunden ist, so dass
- die Erregerwicklung über die erste und zweite Wicklung schleifringlos erregbar ist.

2. Elektrische Maschine nach Anspruch 1, die als Asynchronmaschine oder Synchronmaschine ausgebildet ist.

3. Elektrische Maschine nach Anspruch 1 oder 2, die ein Gehäuse (1) aufweist, in dem der Ständer (2) befestigt und der Läufer (3) gelagert ist.

4. Elektrische Maschine nach Anspruch 3, wobei die zweite Wicklung (7) an dem Gehäuse (1) befestigt ist.

5. Elektrische Maschine nach einem der vorhergehenden Ansprüche, wobei die erste Wicklung (6) und die zweite Wicklung (7) jeweils ein Spulengehäuse (8, 9) aus einem magnetisch leitenden Werkstoff besitzen.

6. Elektrische Maschine nach einem der vorhergehenden Ansprüche, wobei die erste Wicklung (6) und die zweite Wicklung (7) jeweils in Umfangsrichtung des Läufers (3) gewickelt sind.

7. Elektrische Maschine nach einem der vorhergehenden Ansprüche, wobei die zweite Wicklung (7) von einem Wechselrichter (11) angesteuert ist, der von einer Gleichspannungsquelle versorgt ist.

8. Elektrische Maschine nach Anspruch 7, wobei der Wechselrichter (11) von einer Steuereinrichtung (12) angesteuert ist, die den Wechselrichter entsprechend einem vorgegebenen Sollwert (U_{E*}) für die Erregerspannung ansteuert.

9. Elektrische Maschine nach Anspruch 8, wobei das Ansteuern des Wechselrichters (11) durch die Steuereinrichtung (12) mithilfe eines pulsweitenmodulierten Signals erfolgt.

10. Elektrofahrzeug mit einer elektrischen Maschine nach einem der vorhergehenden Ansprüche.
